# EUROPEAN PATENT APPLICATION

(11) **EP 2 230 137 A1**
(43) Date of publication of application: **22.09.2010**
(21) Application number: 08736668.8
(22) Date of filing: 07.02.2008
(51) Int. Cl.: B60R 22/32

(54) **TIME-CONTROLLED OPENING DEVICE FOR VEHICLE SEAT BELT BUCKLES**

(30) Priority: 18.01.2008 ES 200800100 U
(71) Applicant: Soriano Vilalta, Antonio, 29004 Malaga (ES)
(72) Inventor: Soriano Vilalta, Antonio, 29004 Malaga (ES)
(74) Representative: Isern-Jara, Nuria
(86) International application number: PCT/ES2008/000064
(87) International publication number: WO 2009/090274

(57) **Abstract**

The invention relates to a time-controlled opening device for vehicle seat belt buckles. In the event of an accident and once the airbags (7a) have inflated, the vehicle (7) sends a signal to a unit (1) which in turn supplies current to a first module (5) which holds same for a period of time pre-determined in the delay timer (5) thereof and, once the time has elapsed, supplies the current to a second module which is associated with each of the elements (2) powering different electromagnets (6), retracting a part (6a) at the respective cores thereof, thereby exerting sufficient magnetic pull to disengage each hook (3) and generate the automatic release of the buckles (4).

## Description

### Object of the Invention

The present invention relates to a time-controlled opening device for seatbelt buckles in vehicles, which provides essential novelty features and considerable advantages with respect to the means known and used for the same purposes in the current state of the art.

More particularly, the invention proposes the development of an actuating device that is able to operate the buckle elements of the seatbelts in a vehicle in the event that due to an accident or the like, one or more of the airbags incorporated in the vehicle are triggered. The device includes a delay timer module electrically connected to the control module of the different airbags of the vehicle, and an operating module in relation to each of the belt buckles incorporating an electromagnet which causes the release of the associated belt when it is powered from the mentioned delay timer module.

The field of application of the invention is generally comprised in the industrial sector dedicated to the manufacture and/or installation of safety devices and elements in any vehicle which uses seatbelts.

### Background and Summary of the Invention

It is a generally known fact that vehicles of all types include a seatbelt associated with each of the seats of the vehicle, i.e., for the driver and each of the passengers. These belts typically consist of bands of cloth associated with automatic winding means, integrally fixed on one of the ends to a suitable anchor fixed to the body of the vehicle, and which can be unwound by traction such that any user can pass them over the front part of his body, adapting to the bulk and size body features, and finally be fixed in second anchor means also integral with the body of the vehicle, by inserting a buckle-type element incorporated by each of the belts, designed and sized to be inserted in an opening of said second anchor means where it is automatically retained by movable hooks located inside said second anchor. These movable hooks can be operated from the exterior against the action of a return spring when the user exerts suitable pressure on a button provided for that purpose.

Seatbelts have become a necessary and mandatory element to be incorporated in vehicles given the protection they provide to users in the event that any type of accident occurs. The protection is associated with the retention they exert on the user's body, preventing unwanted body movements in any direction, and holding the user's body against the respective seat. However, and under determined circumstances, seatbelts can also be dangerous elements for the physical integrity of the passenger, as in the case, for example, when the vehicle is overturned and the user's weight or the position in which he may have been trapped inside the vehicle prevent the user from being able to access the release button, being trapped inside the vehicle and therefore exposed to the consequences arising after the accident, such as fires occurring in vehicles suffering accidents. In fact, these incidents have caused in practice many deaths which probably could have been avoided had the user been able to undo the retention of the belt and get out of the vehicle on time, as occurs, for example, when the vehicle goes off a cliff and the user is trapped by the seatbelt when he is in a bad position, without being able to unfasten the belt himself.

Therefore, and even though the seatbelt is certainly a necessary protective element for the safety of passengers in a vehicle, it nevertheless does involve, in determined circumstances, high risk level which must evidently be corrected.

Taking the foregoing into consideration, the present invention proposes the main objective of providing a device which allows solving the current drawbacks associated with the necessary use of seatbelts in vehicles. This objective has been fully met by means of the device object of the following description, and the main features of which are included in the characterizing part of the attached claim 1.

Essentially, the device of the invention is applicable to any type of vehicle, both in a newly manufactured vehicle and in those already existing with some minor modifications. The device is made up of two separate modules, a first module of which consists of a delay timer, which can be assembled in any location of the vehicle that is considered appropriate, powered by the battery of the vehicle or provided with an autonomous supply with the aid of a small rechargeable auxiliary battery, electrically connected to the control circuit of the airbags of the vehicle, intended to provide a supply voltage and trigger for a second module, provided for its incorporation in the second anchor of the belt, i.e., the anchor incorporating the buckle and retention elements of the belt buckle, this second module consisting of means of acting on the retaining device for retaining the belt buckle for the automatic opening of the retaining element and the release of the belt when the first delay timer module determines doing so. Therefore, independently of whether or not the user is able to operate the release button of the seatbelt himself, the device automatically performs this release when an accident occurs and the airbags of the vehicle are triggered, thereby eliminating the risks that the users can be trapped inside the vehicle.

### Brief Description of the Drawings

These and other features and advantages of the invention will be more clearly understood from the following detailed description of a preferred embodiment thereof, given only with an illustrative and by no means limiting character, taken together with the attached drawings, in which:
Figure 1 shows a general schematic view of the automatic opening device for seatbelts designed by the invention;
Figure 2 shows a schematic depiction of a seatbelt anchor element adapted according to the invention, in the retained belt condition, along with a detail D2 of the retaining electromagnet in the mentioned condition, and
Figure 3 shows a schematic depiction of the same anchor element of Figure 2, in the released belt condition, along with a detail D3 of the condition occupied in this case by the electromagnet incorporated in the mentioned anchor element.

### Description of a Preferred Embodiment

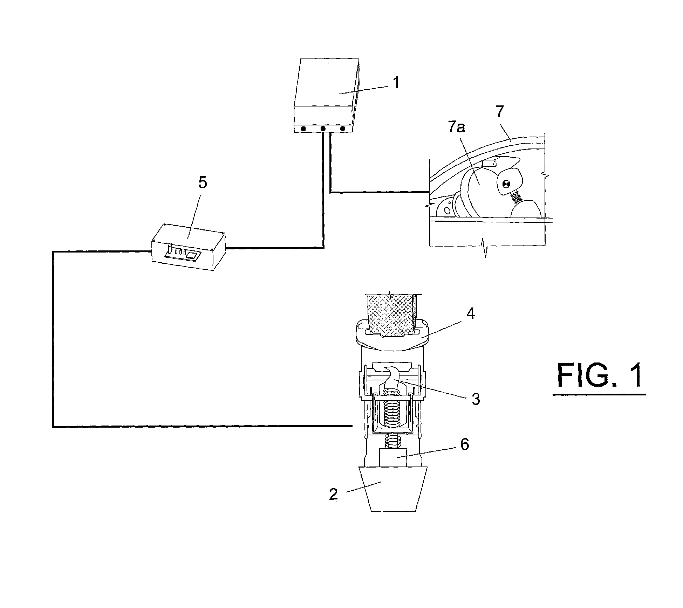

As mentioned above, the detailed description of the preferred embodiment of the invention will be made below with the aid of the attached drawings, throughout which the same reference numbers will be used to designate identical or similar parts. Therefore, first considering the depiction of Figure 1, a schematic view of a device designed according to the teachings of the invention, associated with the corresponding operating members of the vehicle, can be seen. The figure shows a unit 1 corresponding to the control module of the airbags 7a of a vehicle 7, the anchor element 2 conventionally included in the vehicle in relation to each of the seatbelts included therein, and the anchor of which incorporates hooking means 3 acting on the buckle 4 to keep the latter in the retained condition when the belt has been fastened by the user, and which can be operated from the exterior by the user when he wants to release the belt. In association with these conventional means, the device of the invention includes a first module identified with reference number 5, consisting of an electronic circuit functioning as a delay timer, having an input electrically connected to the control unit 1 of the airbags of the vehicle, and an output electrically connected to each second module of the device of the invention, there being a second module in each of the anchors 2 of the different belts assembled in the vehicle.

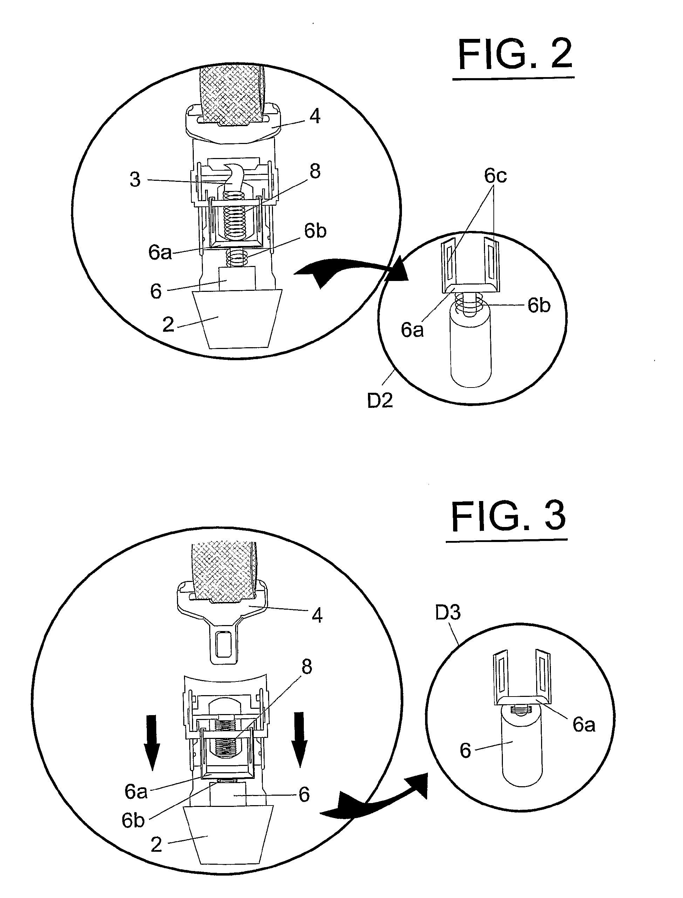

The second module of the invention, incorporated in the anchor 2 of the vehicle and provided for the retention/release of the seatbelt buckle 4, has been shown with greater detail in Figures 2 and 3 of the drawings, which respectively show the retained belt and released belt conditions. According to the mentioned depictions, said second module essentially comprises an electromagnet included in the anchor element, made up of a coil or solenoid 6 and a core that is movable concentrically with said coil, driven outwardly by a spring 6b, and including at its free end a U-shaped part 6a having a longitudinal opening 6c in each of its side branches, through which the bolt 8 of the retention means is passed. These elements can be seen better in the schematic depiction of detail D2.

In the depiction of Figure 2, the belt is fastened, with the hook 3 retaining the buckle 4, and in which the second module of the device of the invention is inactive. In these conditions, the user can release the belt in the usual manner, i.e., with the aid of the conventional external button. However, according to Figure 3, if an accident occurs that determines the actuation of the control unit 1 of the airbags 7a of the vehicle 7, causing them to deploy in order to protect the passengers in the vehicle, this same electric signal present at the output of the unit 1 is used to trigger the first module 5, i.e., the delay timer is started in order to count the previously established time, after which it provides a supply voltage to each of the modules associated with each belt, generating the automatic release of all the belts. This situation corresponds with the schematic depiction of Figure 3, which shows the core of the electromagnet retracted towards the interior of the solenoid 6 against the action of the spring 6b in accordance with the electric supply provided from the first delay timer module 5, the bolt 8 moved down due to the traction exerted thereon by means of part 6a associated with the core of the electromagnet, and with the buckle 4 free of the retaining hook 3, and therefore released for its separation from the anchor element 2.

Therefore, when an accident occurs and one or more of the airbags 7a of the vehicle 7 is triggered, all the release modules included in the different anchor elements 2 receive the corresponding electric supply voltage, and the core of each of the electromagnets is retracted, thereby releasing all the belts which may be fastened at that time. The release is therefore automatic, and it is thereby assured that the passenger will be free of the seatbelt without having to intervene in order to press the release button. Detail D3 shows the electromagnet in the activated condition, i.e., with the core retracted towards the interior of the coil 6, and with end part 6a in a position much closer to the coil 6 than in the case of detail D2.

As will be understood, the voltage necessary for the electric supply of the different circuits and operating members is obtained from the battery of the vehicle. However, in a preferred embodiment, the invention has provided the incorporation of a small battery associated with the first module 5, for the purpose of assuring that said module will operate even in those cases in which, as a result of the accident, the battery of the vehicle may possibly be moved and the electric connection therewith cut off.

In addition, the delay time provided by the delay timer included in the first module 5 of the device of the invention can be regulated depending on the different needs and according to the time thresholds that are considered suitable for the specific application for which it is intended.

It is not considered necessary to further explain the content of the present description so that a person skilled in the art can understand its scope and the advantages derived therefrom, as well as put the invention into practice.

Notwithstanding the foregoing, and since the description made only corresponds to one embodiment, the invention could be susceptible to many also protected changes and variations that may affect the features relating to shape, size and construction of the different members of the assembly and the functional and operating features of the electronic means, without departing as a result from the scope of protection of the invention as it is defined in the attached claims.

## Claims

1. A time-controlled opening device for seatbelt buckles in vehicles, particularly a device intended to act on all the belt buckles of the vehicle for the purpose of automatically releasing, in the event of an accident, those which are in the "fastened" condition when the airbags (7a) of the vehicle (7) inflate, **characterized in that** it comprises two separate modules, a first module (5) of which, electrically connected to the control unit (1) of the airbags and powered by the battery of the vehicle, consists of a delay timer, with a pre-determined time threshold, with an input electrically connected to the output of the unit (1) such that the counting of the delay time starts after the instant in which said output of the control unit (1) supplies the airbag triggering voltage, and a second module associated with each of the anchor elements (2) of the respective belt buckle (4), electrically connected to the output of said delay timer module (1), consisting of an electromagnet made up of a coil (6) and a core that is movable concentrically with the coil against the action of a spring (6b), which at its free end includes a U-shaped part (6a) with an opening (6c) in each of the side branches of the U, in which the bolt (8) associated with the retaining hook (3) of the buckle (4) is received and housed, such that when the delay timer module (5) powers the different electromagnets, the retraction of the respective cores exerts sufficient pull to disengage each hook (3) and thereby generate the automatic release of the corresponding buckle (4).

2. The device according to claim 1, **characterized in that** the inclusion of a small rechargeable auxiliary battery has been provided in an alternative embodiment for the autonomous supply of the delay timer module (5) and of the associated electromagnets.
